# EUROPEAN PATENT APPLICATION

(11) **EP 0 691 369 A1**
(43) Date of publication of application: **10.01.1996**
(21) Application number: 94110640.3
(22) Date of filing: 08.07.1994
(51) Int. Cl.: C08J 7/04

(54) **Primer coating for polymeric film**

(71) Applicant: Hoechst Diafoil GmbH, D-65023 Wiesbaden (DE)
(72) Inventor: Dallmann, Herrmann, D-65207 Wiesbaden (DE); Dries, Thomas, D-55270 Schwabenheim (DE); Krause, Günter, D-65719 Hofheim/Taunus (DE)
(74) Representative: Beck, Bernhard

(57) **Abstract**

Described and claimed is a primer coating, and polymeric film with the primer coating making the film suitable for moisture-resistent and retort packaging applications. The primer coating comprises a shellac component and a copolyester component, both of which are water-dissolvable or dispersible. The shellac component can include modified shellac resins such as shellac varnish, shellac-lacquer, or shellac copolymers.

## Description

The present invention is directed to a polymeric film with an effective amount of the primer coating composition on at least one side thereof. The primer coating consists of a copolyester composition uniformly blended with a shellac composition. It has been found that this primer coating composition is excellent for the field of moisture-resistant or retort packaging films and yields superior adhesion performance over known moisture-resistant or retort packaging films.

Retort films are well known and are generally employed as a packaging material for food, particularly food-containing liquids such as vegetables, meats, fruits, etc. but also for dried food. Retort films are used for pouches into which the food is placed and sealed so that the food can be stored for a sufficiently long shelf life (at room temperature, or in a refrigerator or a freezer) and can also withstand cooking conditions when the pouch is placed in boiling water or when the pouch is placed in a microwave to cook the food. Thus, retort film must have a high gas barrier property and a low water vapor permeability property. It is also desirable that the film be heat-sealing, printable, and transparent.

Thermoplastic retort packages or pouches made with aluminum foil or a metallic coating have excellent gas barrier properties and low water vapor permeability properties but suffer the obvious drawback of not being transparent so that the food contained within the pouch is not visible. Consumer studies showed that retort packages which are transparent are vastly preferred by the customer.

Retortable transparent laminates for packaging applications with a barrier layer based on ceramic material such as for example SiOₓ which is deposited on the self-supporting layer are disclosed in EP-A-0 545 856.

In non-retort applications, it is often desirable for a moisture resistant film to have low water vapor permeability characteristics. Such films are used for packaging purposes in southern climates with high humidity, for example. Such packages are useful for potato chips, cookies, pickles, and accouterments, such as ketchup, mustard, sour cream, and salad dressings, for example. With these type of non-retort packaging films, it is often desirable to have a metallic coating to prevent light and ultraviolet rays from spoiling the contents.

In many instances food packaging film must also have good ink adhesion and the relative toxicity of the whole primer layer becomes important. The present invention relates to an oriented coated thermoplastic film which exhibits enhanced adhesion to water and solvent based inks and adhesives, metal or other coatings (such as reprographic coating as mentioned in DE-A-28 13 014) deposited onto the treated areas and which is resistant to high relative humidity, water, boiling water, sterilization, especially good adhesion to inks with low Cl-content of the binder and low MEK-content of the solvent.

Primer coating compositions based on polymers such as acrylics, vinylidene chloride containing components and many other similar primers raise toxicity problems because of potential migration of components of said primer material into foodstuffs with which it is in contact. Non-toxic coatings for polyester films are disclosed for example in US-A-4,486,483, US-A-4,493,872 or EP-A-0 316 620.

Unfortunately, the non-toxic ink adhesion coatings disclosed in US-A-4,406,483 and the metal adhesion promoting copolyester disclosed in US-A-4,493,872 do not possess superior resistance to moisture.

The non-toxic moisture resistant coating system disclosed in EP-A-0 316 620 is a two component system that reacts to form an alkaline earth salt of a fatty acid having from 10 to 18 carbon atoms. The main drawbacks of this adhesion promoter is that the two components must be applied by a cost intensive sequential coating process and the method of experimentation which must be performed to dose the necessary amounts of the two components exactly is very critical. Furthermore, the examples set forth therein are limited to high relative humidity at a temperature in a range of about 40 °C.

EP-A- 0550 039 to Matsuda et a. discloses a gas barrier film suitable for retort packaging and also suitable for non-retort applications such as packaging for ketchup, mayonnaise, mustard, salad dressings, etc. The gas barrier film includes a plastic film substrate with an aluminum oxide or silicone oxide coating to produce a film having good gas barrier properties.

US-A-4,493,872 to Funderburk et al. discloses a copolyester primer coating which may be applied to a polymeric film such as polyamides, polyolefins, polysulfones, polyacetal, polycarbonate and polyester (such as polyethyleneterephthalate). This copolyester coating composition, when applied to a polymeric support, provides excellent adhesion between the polymeric support and a subsequently applied metallic coating.

The copolyester primer coating composition consists of:
a) about 65 to 95 mol-% of isophthalic acid;
b) about 0 to 30 mol-% of at least one aliphatic dicarboxylic acid;
c) from about 5 to 15 mol-% of at least one sulfomonomer; and
d) a stoichiometric amount of at least one alkylene glycol having from about 2 to 11 carbon atoms.

Canadian Patent No. 818,450 to Mahler discloses employing shellac to promote the adhesion of conventional inks and adhesives to polymer film substrates. The amount of shellac applied to the polymer film is not more than about 0.06 pounds on a dry basis per 1000 sq/ft. The shellac was dissolved in an aqueous alkaline solution producing about 1 percent by weight shellac and may be further diluted with water. The shellac was applied to the substrate film during manufacturing of the film (typically referred to as in-line process). Moreover, the shellac could also be applied off-line (after the manufacturing process for making the polymer film).

As a result of the investigations performed by the inventors in consideration of the above-described problem, the inventors have discovered a water resistent oriented thermoplastic film, especially an oriented polyester film, of excellent bonding characteristics obtained by applying an aqueous primer system containing: a non-toxic polyester resin, the molecules of which contain organic sulfonate salt groups; and a non-toxic shellac component to the surface of the film before completing orientation and crystallization.

In the resulting products a thin layer of the claimed coating system is interposed between an oriented film prepared from a thermoplastic polymer and an ink, adhesive, other coating systems or a metal deposited onto the coated film.

In the broadest sense, the present invention includes a primer coating of a water dissolvable or water dispersible copolyester and a shellac composition. In accordance with this sense, the shellac portion can range from 5 to 95 % by weight of the primer coating, with the remainder being copolyester. To make the copolyester water dissolvable or water dispersible, it should include at least 5 mol-% of a sulfomonomer. The sulfomonomer is generally a sulfonate group attached to a dicarboxylic nucleus.

The present invention also relates to a moisture resistant coated thermoplastic film comprising:
- an oriented plastic film,
- a moisture resistant coating comprising at least one copolyester containing at least 5 mol-% of a sulfomonomer and a shellac composition.

In one preferred aspect the present invention is a moisture resistant, coated polyester film comprising:
- an oriented polyester film,
- a primer coating on at least one side of the film comprising at least one copolyester containing 5 mol-% of a sulfomonomer and a shellac composition, said primer coating being present at a weight effective to improve the adhesion of printing inks, metal, and being more moisture-resistant than a coating based upon the copolyester alone, or the shellac alone.

It is a broad object of the present invention to produce a polymer film having a primer coating thereon that is moisture-resistant once the primer coating has thoroughly dried on the polymer film.

In keeping with the foregoing aims, objects and aspects of the present invention, a large number of polymeric substrates can be employed as the polymer film. Polymer films made from polyesters, copolyesters, polyamides, polyolefins, polycarbonates, polysulfones and copolymers of each of the above and/or mixtures of each of the above are all suitable materials. The preferred substrate polymer is polyester, and more preferably polyethyleneterephthalate. Examples of polyester other than polyethyleneterephthalate, are polybutyleneterephthalate, polyethylene-2,6-naphthalate, or mixtures of these. Examples of polyamides are nylon-6, nylon-4, nylon-66, nylon-12, and mixtures of these. Examples of polyolefines are polypropylene, polyethylene, cycloolefins and/or mixtures of these materials. It is also contemplated that the substrate polymer film could be a laminate of two or more different types of polymers in the same or different classes, for example, a laminate of polyester and polyolefine, or a three-layer laminate such as polyester-polyester-polyester, or polyester-polyolefine-polyester, etc. While the invention will be illustrated using polyester as the base film, and specifically polyethyleneterephthalate, the invention is equally applicable to polymer films based on the other polymers described herein.

To make a film from these various polymers, well-known techniques in the art may be employed along with well-known apparatus. For example, a polyester resin may be melted and extruded as an amorphous sheet onto a cooled polished revolving casting drum to form a cast sheet of the polymer. Thereafter, the film is actually stretched in one direction at a temperature between 80 and 120 °C, either in the direction of extrusion (longitudinal) or perpendicular to the direction of the extrusion (traverse). After this first stretching step, further stretching may be desired in the perpendicular direction to the first stretching step. The amount of stretching, to impart strength and toughness to the film, can range from about 3.0 to 5.0 times the original cast sheet dimensions in one or both directions for polyester film. The stretching operations are carried out at temperatures in the range of from about the second order transition temperature of the polymer resin to below the temperature at which the polymer softens and melts. The number and sequences of the longitudinal and transverse stretching steps is not prespecified in fixed terms, but depends on the requirements. The individual stretching operations, i.e. "longitudinal", "transverse", can be carried out in one or more steps. Simultaneous stretching is likewise possible.

The films resulting from the stretching processes may have strength in one direction (monoaxially stretched), have balanced mechanical properties in both directions (balanced films) or have particular strengths in the transverse and/or longitudinal direction (tensilized or supertensilized films).

After stretching the film, the film is heat-treated for a period of time necessary to crystallize the polymer. Crystallization imparts stability and good tensile properties to the film. When polyethyleneterephthalate is heat-treated, it is subjected to a temperature in the range of between 190 °C and 240 °C and, more preferably, in the range of between about 215 °C and 235 °C.

Any of the above polymeric films can contain conventional additives such as antioxidants, dilusterants, pigments, fillers such as silica, calcium carbonate, kaolin, titanium dioxide, organic particles compatible with the polymeric film, antistatic agents, UV stabilizers, etc. all of which are well-known in the art.

The thickness of the polymeric film suitable for the present invention may generally range from about 0.5 to 500 µm, particularly from 0.5 to 350 µm. In case of packaging films more preferably from about 8 to 50 µm.

With respect to the primer coating composition of the present invention, it consists of two parts, namely a shellac component and a copolyester component. The shellac component can be shellac itself, a natural resin produced by the secretion of a specific insect after feeding upon certain trees. The shellac component may also consist of modified shellac resin, such as shellac and varnish, or modified with other synthetic resins such as lacquers is also known. The shellac component can also include a shellac-copolymer material in which the copolymer may be, for example, methacrylate, acrylate copolymer, epoxy, urethanes, alkyds, phenolic (phenol-formaldehyde) or other shellac copolymers which are compatible with both the primer coating and the polymer substrate. When modified shellac resin and shellac copolymers are employed, the shellac included therein is at least 51 % by weight, and preferably at least 80 % by weight. The commercially available shellac types are purified and normally dewaxed and/or bleached and sometimes pre-alkalized.

In preparing dispersions of the present invention for use in overcoating the surfaces of films of the described thermoplastics, the types designated by the tradenames shellac KPS 63 FO-KH, shellac KPS 55 ASTRA and shellac KPS 2411, more preferably the type shellac KPS 63 FO-KH and shellac KPS 55 ASTRA obtained from Kalkhof GmbH, Persen u. Stoeber KG, Mainz, Federal Republic of Germany were employed. Shellac KPS 63 FO-KH is pre-alkalized and can directly be solved in water while KPS 55 ASTRA needs a basic medium for solution. KPS 55 Astra is an alkali free shellac and is especially preferred due to its brightness. KPS 2411 is a dispersion of a grafted acrylic shellac. The preparation of the shellac solution to be used for the preparation of the dispersion of this invention is discussed in the examples. The disclosed primer coating of this invention is not restricted to the described and other shellac types of this supplier. Types of other suppliers can as well be used. Non pre-alkalized shellac types with good brightness were favored.

With respect to the two-part primer coating composition, it is contemplated that the shellac portion can range from 5 to 95 % by weight of the primer coating composition, with the remaining part being copolyester. Preferably, the shellac portion ranges between 30 to 70 % by weight of the primer coating composition. If the shellac is not a water-soluble, or water-dispersible type, then the shellac can be made water-soluble, or dissolved in an alkaline medium such as ammonium carbonate, caustic soda, ammonia, etc. Then, the water-soluble or dispersible shellac is uniformly blended with the water-soluble or dispersible copolyester portion.

With respect to the copolyester portion of the primer coating composition, it may generally be prepared as described in US-4,493,872, except that the acid component is not limited to isophthalic, and the sulfomonomer range of the present invention is not limited to an alkaline metal sulfonate group as disclosed in US-4,493,872. The sulfomonomer group of the present invention may comprise any sulfomonomer in which a sulfonate group is attached to a dicarboxylic nucleus. For example, an ammonium sulfonate group can be employed. It is noted in the above patent that the lower limit for the sulfomonomer group is stated to be 5 mol-%, and that this minimum amount is required to impart water-dispersibility to the primer.

Generally, the copolyester of the present invention can comprise, before dilution:
a) from about 65 to 95 mol-% of isophthalic acid, terephthalic acid, or mixtures thereof;
b) about 0 to 30 mol-% of at least one aliphatic dicarboxylic acid;
c) from about 5 to about 15 mol-% of at least one sulfomonomer containing a sulfonate group attached to a dicarboxylic nucleus; and
d) stoichiometric quantities of about 100 mol-% of at least one copolymerizable alkylene glycol having from about 2 to 11 carbon atoms.

The aliphatic dicarboxylic acids, sulfomonomers, and glycols which may be employed in the present invention can be those described in US-4,493,872. Sulfomonomers suitable for the present invention are generally represented by the formula 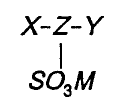
wherein m is a monovalent cation and may be selected from the group of alkaline metals, ammonium, substituted ammonium and quaternary ammonium; Z is a trivalent radical; and X and Y are carboxylic groups or polyester forming equivalents. Sulfomonomers wherein Z is aromatic are disclosed in US-3,563,942 and US-3,779,993 and are incorporated herein by reference. Species of such monomers include sodium sulfoterepthalic acid; ammonium sulfoterephthalic acid; sodium-5-sulfoisophthalic acid; ammonium-5-sulfoisophthalic acid; sodium sulfophthalic acid; ammonium sulfophthalic acid; 5-(p-sodiosulfophenoxy)isophthalic acid; 5-(sulfopropoxy)isophthalic acid sodium salt; and like materials as well as their polyester forming equivalents, such as dimethylesters.

The term "polyester-forming equivalents" as used herein means reactants having groups capable of undergoing condensation reactions to form polyester linkages, which groups include carboxylic groups as well as lower alkyl esters thereof, for example dimethylterephthalate, diethylterephthalate and many other corresponding esters, halides or salts. It is preferred to employ the acids monomers such as the dimethyl esters as this facilitates better control of the condensation reaction.

Examples of suitable glycols include ethylene glycol; diethylene glycol; butanediol; 1,5-pentanediol; 1,6-hexanediol; neopentyl glycol; 1,10-decanediol; cyclohexane dimethanol; and similar materials. Ethylene glycol is the much preferred glycol.

Examples of suitable aliphatic dicarboxylic acids include malonic, adipic, azelaic, glutaric, sebacic, suberic, succinic, brassylic acids and mixtures thereof, or their polyester-forming equivalents. Sebacic acid is the preferred diacid.

To the extent applicable, US-4,493,872 is incorporated herein by reference.

The primer coating of the present invention is typically applied to the base film as an aqueous dispersion and at a solid's concentration within the range of about 0.5 to 12 % by weight, preferably from about 2 to 6 % by weight, and more preferably 4 % by weight with the preferred component composition of 30 to 70 % by weight shellac to 70 to 30 % by weight copolyester. The preferred solid's level, as it is applied to the polymeric film substrate, is such to yield a final dry coating weight within the range of about 0.00305 g/m² to 0.305 g/m². The preferred thickness range of the dried primer coating is from about 2.54x10⁻⁶ mm to 2.54x10⁻³ mm with a target thickness of 2.54x10⁻⁵ mm.

The primer coating may be applied to the polymer film substrate by any known method. For example, roll coating, reverse roll coating, gravure roll coating, reverse gravure roll coating, roll brush coating, spray coating, airknife coating, dipping, or meniscus coating may be employed.

The coating may be applied to one or both sides of the film depending on its final application.

Primer coated films of the present invention exhibit excellent adhesion to inks, adhesives, metals and other overcoatings, and any scrap coated film made during the production can be mixed with fresh polymer of the same type, remelted, and re-extruded to produce an oriented film support. Such films could contain up to about 70 % by weight of coated scrap reclaim, particularly in applications where color and appearance of the polymeric film substrate are not critical. In those applications where color and appearance are important, the amount of reclaim employed can be up to an amount where perceptible degradation of the color properties (due to the presence of the coating impurities) is not easily or readily detected. The primer coated films of the present invention offer an advantage over other commercially available primer coated films similar to the present invention because of the reclaimability of the scrap materials of the present invention.

In-line coating of the polymeric support film (where the primer coating is applied during the manufacturing process of the film) is the preferred method of applying the aqueous primer coating to the polymeric film. Typically, the polymeric film may be coated after corona treatment and prior to the stretch orientation of the film as described in GB-A-1,411,564, or coated interdraw (after stretching in one direction but before stretching in the other direction) in those production methods in which a biaxially oriented film is employed, as taught by US-4,571,363 or coated post-draw (after completion of all stretching) as taught by US-3,322,553. Normally, the heat applied to the film during stretching or heat-setting is sufficient to evaporate the water and dry the coating.

In addition to in-line coating, it has also been determined that the primer coating of the present invention may be off-line coated, preferably after conventional surface modification of the polymer substrate has occurred. Thus, the process of the present invention is intended to cover those situations in which a plain polymeric substrate is produced, and then is later off-line coated with the primer coating of the present invention (generally after surface treatment such as corona treatment). Off-line coating is not preferred, however, because the coating thickness is generally thicker and because dust and the like is apt to be mixed in with the coating because off-line coating processes generally do not occur in "clean environments", unlike in-line manufacturing processes which do occur in a clean environment. Moreover, when coating off-line (after heat-setting the film), it is generally necessary to include a drying step after applying the aqueous primer coating so as to dry the primer coating before winding the film.

In one preferred embodiment, the coating is applied after the film is uniaxially stretched, that is, after the film is stretched in one direction, but before this film is stretched in the orthogonal direction. In a preferred embodiment, the polymer film is primer coated by means of a reverse gravure roll-coating process. Additionally, the film is preferably subjected to a surface treatment such as flame treatment, electrical discharge treatment (typically known as corona treating) just prior to coating, as is well known in the art. Such surface treatment decreased the hydrophobic character of the film surface and permits the water-based primer coating to more easily wet the film and thus improve the adhesion of the primer coating to the polymeric film.

While surface modification of the polymeric substrate is not rigidly required, better results are obtained if the surface of the polymeric film is modified immediately before application of the primer coating of the present invention. Corona treatment of the film is the most common and preferred procedure for modifying the surface of the polymeric substrate. The corona treatment or other surface modification should be sufficient to permit wetting-out of the primer coating. For corona treatment, this is generally along the order of 0.1 watts/m²/min.

The coating composition can also contain ingredients as long as they do not detract from adhesion promoting action of the primer system. Such ingredients can include minor amounts of antibloc substances such as collodial silica, antistatic agents, wetting agents, surfactants, fillers, dyes, pH regulating agents, organic slip additives such as higher fatty acids, waxes.

In some cases, especially for technical applications, such as reprographics it may be desirable to add cross-linkable agents to the dispersion, e.g. from about 0.05 to 20, particularly from 0.1 to 5 percent by weight of urea melamin or urea/formaldehyde, ester chelate, metal esters, ammonium zirconyl carbonate, and the like to modify the properties of the primer layer.

### Experimental Data

The following examples illustrate the practice and advantages of the specific embodiments of the present invention. However, in no event should these specific samples be construed as limiting the scope of claims.

### Adhesion Test

The adhesion of inks to the primer layer was measured using the following method. Three stripes of a Scotch tape No. 610 were attached to the ink coating layer by rubbing up and down vigorously on the back of the tape. The adhesive tape was then removed by pulling rapidly from the surface. The film sample was then viewed over a light box. The amount of coating removed was assessed as good (undamaged), fair (slightly damaged), poor (strong damaged), as set forth in Table I. All results were good with no deficiencies.

### Moisture Resistance Test

Moisture resistance of the coated film of the present invention was evaluated after laminating with a polyolefin film or an aluminum sheet as described.
a. storage of a 15 mm stripe of the film in a water bath for more than 150 hours at room temperature;
b. storage of a 15 mm stripe of the laminate for more than 5 minutes in boiling water;
c. retort conditions: pouches prepared from PET/Al/PO-laminates (polyethylenterephthalate, aluminum polyolefin) filled with different foods were stored for about 2 hours in water at 121 °C.

The results of tests A and B of the Moisture Resistance Test are set forth in Table 1, the results of test C of the Moisture Resistance Test are set forth in Table 2.

Immediately after finishing the moisture resistance test procedure the adhesion between the PET/PO for five specimens was measured by peeling apart each specimen using an Instron Tensimeter at a peel speed of 200 mm per min. The peel load was recorded of each specimen. The average results are given in Table 1 and 2.

For packaging applications, various primer coated films are partially overcoated with printing inks and then laminated with a polyolefin film, or in case of gas barrier film, with an aluminum sheet by means of an intermediate adhesive particularly based on polyurethane.

Test samples described in Table 1 and 2 were prepared in the same way. In most cases a printing ink obtained from Fa. Siegwerk, Dr. Rung & Co. Siegburg designated as MRH 23 blue was used which was applied in usual manner with a reverse gravure system. This ink has a low chlorine, low methyl-ethyl-ketone content. This ink did not adhere well on an uncoated oriented PET film, however, the ink adheres well to any primer coated film.

The non pre-alkalized types, for example one of the most preferred types designated as KPS 55 ASTRA, were dissolved in an aqueous alkaline solution. Best results were obtained by dissolving these types in diluted ammonia. For this purpose, a mixture of 76 percent of demineralized water, 4 percent of 25 % by weight ammonia solution and 20 percent of shellac are dissolved slowly with stirring in a water bath at 90 °C and atmospheric conditions.

After preparation, all shellac dispersions and solutions were diluted to a solid content of 10 %, particularly to about 3.5 % by weight and then added to the polyester dispersion with the same solid content.

Then, experimental printed films were made by printing with MRH 23 blue ink on a primed polyester film and then overcoating the printed surface with an urethane based adhesive and laminating a polypropylene sealing layer thereon. Pouches prepared from these laminates were filled with water or foods and thereafter subjected to different moisture resistance tests. The adhesion on both the printed and unprinted areas, both before and after sterilization (2 hours in water at 121 °C) was tested.

### Example 1

A polyethylene terephthalate granulate containing 2000 ppm clay with an average diameter of 1.8 µm as antibloc agent was melted and formed to a melt film by means of a wide slit dye. The melt film was extruded onto a casting drum maintained at 20 °C.

The resulting amorphous film was longitudinally stretched to a ratio of 4.3:1, whereby it was maintained at a temperature of 90 °C. The longitudinally stretched film was corona treated and then, by means of reverse gravure roll system, coated with about a 3 % solids aqueous dispersion of a mixture of the copolyester (obtained from Hoechst Celanese Corp.) and the shellac type KPS 63 FO-KH in the ratio 1:1.

The coated film was stretched in transverse direction to a ratio of about 4.3:1 to produce a biaxially oriented film.

The biaxially stretched film was heat-set at a temperature of 230 °C. The dry weight of the coating was about 0.025 g/m², the thickness of the carrier film 12 µm. The test results are set forth in Table 1.

### Example 2

Example 1 was repeated but in this instance the mixing ratio of copolyester/shellac was 1:2.

### Example 3

Example 1 was repeated but in this instance the primer coating employed non pre-alkalized shellac type KPS 55 ASTRA. The mixing ratio of the components was 1:1.

### Example 4

Example 1 was repeated but in this instance the primer coating was an aqueous dispersion of a mixture of shellac KPS 2411 and copolyester in a ratio of 4:1.

### Comparative Example 1

Example 1 was repeated but in this instance the primer coating contained only dispersions of the copolyester (no shellac) with different solid content. The dry weight of the coatings were about 0.060 and 0.025 g/m².

### Comparative Example 2

Example 1 was repeated but in this instance the primer coating contained only dispersions of the shellac type KPS 63 FO-KH (no copolyester) with different solid contents. The dry weight of the coatings were about 0.090 and 0.025 g/m².

The results of these tests are summarized in Tables 1 and 2.

The films equipped with the claimed coating system exhibit an enhanced moisture resistance and are capable of withstanding retort conditions as demonstrated in Table 2.

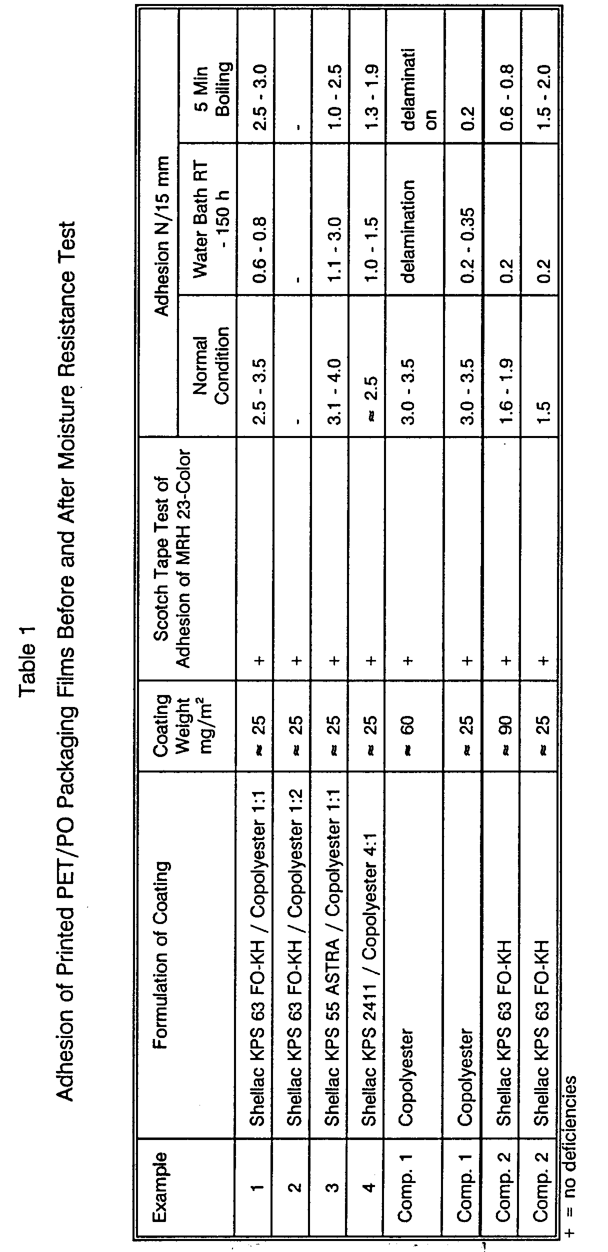

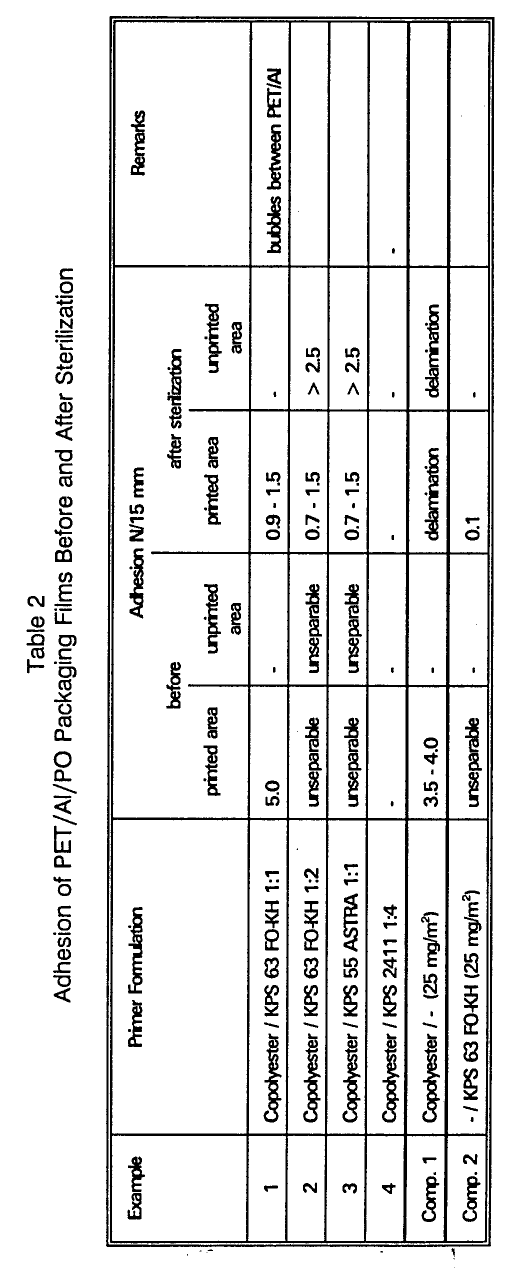

A polymeric film coated with the primer coating composition of the present invention has excellent utility as a base film for the production of metallized polymer films. Such films are prepared by well-known prior art techniques such as by forming a coating on a surface of the coated polymer film by directing a stream of metal vapor or atoms onto the surface of the film by a vacuum deposition technique. This is effected by heating the metal in a high vacuum, preferably in the range of about 10⁻³ to about 10⁻⁵ torr, to a temperature above its melting point such that the vapor pressure of the metal exceeds about 10⁻² torr, or it is effected by subjecting the metal to a string of bombarding ions whereby the metal is removed by mass transfer "sputtering". When these conditions are achieved, the metal is vaporized or sputtered, emitting metal vapor or atoms in all directions. These vapors or atoms impinge on the film surface, condense and thereby form a thin metallic coating on the film. Metals applicable to this process are zinc, nickel, silver, copper, gold, indium, tin, stainless steel, chromium, titanium, and most preferably aluminum, and including also the oxides of those metals, including aluminum oxide. The thickness of the applied metal coating is a matter of preference depending upon the final use of the metallized film. Thicknesses for aluminum in packaging applications range from about 300 to 600 Å, while thicknesses in solar applications are generally less than 100 Å.

Thus, it is apparent that there has been provided, in accordance with the invention, a primer coating, and a support film containing the primer coating that fully satisfied the objects, aims and aspects set forth above. While the invention has been described in conjunction with the specific embodiments thereof, it is evident that many alternatives, modifications and variations will be apparent to those skilled in the art in light of the foregoing description. Accordingly, it is intended to embrace all such alternatives, modifications and variations as falling within the sphere and broad scope of the present invention.

## Claims

1. A moisture-resistant coated thermoplastic film comprising:
a) an oriented thermoplastic film; and
b) an effective amount of a primer coating containing a water dissolvable or dispersible copolyester component and a shellac component to improve the adhesion of inks or metal to said film, particularly when said film is in contact with water.

2. The film of claim 1, wherein said copolyester component is 5 to 95 % by weight of said primer coating, and said shellac is 95 to 5 % by weight.

3. The film of claim 1, wherein said copolyester component contains an effective amount of at least one sulfomonomer.

4. The film of claim 1, wherein said copolyester component contains at least 5 mole-% of at least one sulfomonomer attached to a dicarboxylic nucleus.

5. The film of claim 4, wherein said copolyester component contains 5 to 15 mole-% of a sulfomonomer attached to a dicarboxylic nucleus.

6. The film of claim 1, wherein said copolyester component contains:
a) 65 to 95 mole-% of isophthalic acid, terephthalic acid, or mixtues thereof;
b) 0 to 30 mole-% of at least one aliphatic dicarboxylic acid;
c) 5 to 15 mole-% of at least one sulfomonomer; and
d) a stoichiometric amount of at least one alkylene glycol having from 2 to 11 carbon atoms.

7. The film of claim 1, wherein said shellac component is a modified shellac resin or shellac copolymer.

8. The film of claim 7, wherein said modified shellac resin is a shellac-varnish composition.

9. The film of claim 7, wherein said modified shellac resin is a shellac-lacquer composition.

10. The film of claim 7, wherein said shellac copolymer is selected from the class of methacrylate, acrylate, epoxy, urethane, or phenolic shellac compositions.

11. The film of claim 7, wherein said modified shellac resin or said shellac copolymer is at least 51 % by weight shellac.

12. The film of claim 1, wherein said shellac component is 30 to 70 % by weight of said primer coating.

13. The film of claim 1, wherein the dried residue of said primer coating is from 2.54x10⁻⁶ mm to 2.54x10⁻³ mm thick.

14. The film of claim 1, wherein said oriented thermoplastic film includes coated scrap reclaim.

15. A primer coating for moisture-resistant or retort packaging applications comprising: a water-dispersible or water-dissolvable copolyester component and a water-dispersible or water-dissolvable shellac component.

16. The primer coating of claim 15, wherein said water-dispersible or water-dissolvable copolyester contains at least 5 mol-% of a sulfomonomer.

17. The primer coating of claim 15, wherein said shellac component is 5 to 95 % by weight of the primer coating.

18. The primer coating of claim 15, wherein said copolyester comprises:
a) from 65 to 95 mol-% of isophthalic acid, terephthalic acid, or a mixture thereof;
b) from 0 to 30 mol-% of at least one aliphatic dicarboxylic acid;
c) from 5 to 15 mol-% of said at least one sulfomonomer; and
d) a stoichiometric amount of at least one alkylene glycol having from 2 to 11 carbon atoms.

19. The primer coating of claim 18, wherein said sulfomonomer comprises a sulfonate group attached to a dicarboxylic nucleus.

20. The primer coating of claim 15, wherein said shellac component is a modified shellac resin or a shellac copolymer.
